# EUROPEAN PATENT SPECIFICATION

(11) **EP 2 578 133 B1**
(45) Date of publication and mention of the grant of the patent: **11.11.2020**
(21) Application number: 11790025.8
(22) Date of filing: 01.06.2011
(51) Int. Cl.: A47L 15/42, A47L 15/46

(54) **DISHWASHER AND METHOD FOR CONTROLLING SAME**
SPÜLMASCHINE UND STEUERUNGSVERFAHREN DAFÜR
LAVE-VAISSELLE ET SON PROCÉDÉ DE COMMANDE

(30) Priority: 01.06.2010 KR 20100051614; 01.06.2010 KR 20100051616
(43) Date of publication of application: 10.04.2013
(73) Proprietor: LG Electronics Inc., Yeongdeungpo-gu Seoul 150-721 (KR)
(72) Inventor: CHUNG, Moonkee, Seoul 153-802 (KR); PARK, Kyunghwa, Seoul 153-802 (KR); CHOI, Yongjin, Seoul 153-802 (KR); LEE, Taehee, Seoul 153-802 (KR); PARK, Younghwan, Seoul 153-802 (KR); JANG, Hyoseon, Seoul 153-802 (KR)
(74) Representative: Vossius & Partner Patentanwälte Rechtsanwälte mbB
(86) International application number: PCT/KR2011/004023
(87) International publication number: WO 2011/152667

(56) References cited:
- EP-A2- 1 111 118
- DE-A1- 3 609 277
- DE-A1- 3 901 169
- DE-A1- 4 403 737
- JP-A- 2002 078 661
- KR-A- 20050 104 685
- KR-A- 20060 106 027
- KR-A- 20100 023 860

## Description

### BACKGROUND

The present disclosure relates to a dish washer.

In general, dish washers are devices that wash dishes, using wash water sprayed from wash arms.

The dish washers comprise a tub defining a wash space, a sump disposed at one side of the tub and storing wash water, and a plurality of wash arms disposed inside the tub.

The wash water that is supplied to the sump is sprayed into the tub after flowing to the wash arms, and flows back to the sump after being sprayed into the tub.

The dish washers performs several operations until washing of dishes is completed and wash water is supplied from the outside through a water supply pipe in at least one operation of the operations.

DE 39 011 69 A1 relates to a dish washer comprising an apparatus for recuperation of thermal energy.

### SUMMARY

Embodiments provide a dish washer. Examples of a control method of such dish washer are described. These examples do not fall in the scope of the appended claims.

In one embodiment, there is provided a dish washer, the dish washer comprising the features of claim 1.

According to an example not falling in the scope of the appended claims, there is provided a control method of a dish washer that comprises a water chamber where water that is used to wash dishes is stored and a sump that is supplied with the water in the water chamber, the control method comprising: supplying the water in the water chamber which is used for a specific operation into the sump; pumping up the wash water in the sump by using the wash pump, with a specific operation started; supplying water into the water chamber from the outside in the specific operation; and exchanging heat between the water in the water chamber and the wash water in the heat exchange passage by bypassing some of the wash water in the sump into the heat exchange passage.

In a further example not falling in the scope of the appended claims, there is provided a control method of a dish washer that comprises a sump including a filter unit that filters wash water, the method comprises: supplying water that is used in a specific operation into the sump; pumping up the wash water in the sump, with the specific operation started; and cleaning the filter unit by discharging some of the wash water in the sump after bypassing some of the wash water outside the sump.

### BRIEF DESCRIPTION OF THE DRAWING

FIG. 1 is a schematic cross-sectional view of a dish washer according to a first embodiment.
FIG. 2 is a perspective view of a water supply unit according to the first embodiment.
FIG. 3 is a front view of the water supply unit, showing the structure of a heat exchange passage.
FIG. 4 is a bottom view of a sump according to the first embodiment.
FIG. 5 is a cross-sectional view of the sump, showing the structure of a wash pump.
FIG. 6 is a cross-sectional view of the sump, showing the structure of an adjuster.
FIG. 7 is a flowchart illustrating a control method of the dish washer according to the first embodiment.
FIG. 8 is a view illustrating a control method of a dish washer according to a second embodiment.
FIG. 9 is a bottom view of a sump according to the third embodiment.
FIG. 10 is a flowchart illustrating a control method of a dish washer according to the third embodiment.
FIG. 11 is a bottom view of a sump according to a fourth embodiment.
FIG. 12 is a flowchart illustrating a control method of a dish washer according to the fourth embodiment.
FIG. 13 is a perspective view of a water supply unit according to a fifth embodiment.
FIG. 14 is a cross-sectional view of a dish washer equipped with a water supply unit according to a sixth embodiment.
FIG. 15 is an enlarged view of the portion A of FIG. 14.
FIG. 16 is a cross-sectional view of a sump according to the sixth embodiment.

### DETAILED DESCRIPTION OF THE EMBODIMENTS

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the scope as defined by the appended claims. To avoid detail not necessary to enable those skilled in the art to practice the invention, the description may omit certain information known to those skilled in the art. The following detailed description is, therefore, not to be taken in a limiting sense, and the scope of the present invention is defined only by the appended claims.

In order for clear understanding, in this specification, "water" implies water that is not used in specific operations and "wash water" implies water that is supplied to a sump or a tub to be used in the operations or that is used or has been used in the operations.

Further, the subject matter of any one embodiment may be applied to the subject matter of another embodiment, two or more embodiments may be combined, new structures may be derived from two or more embodiments.

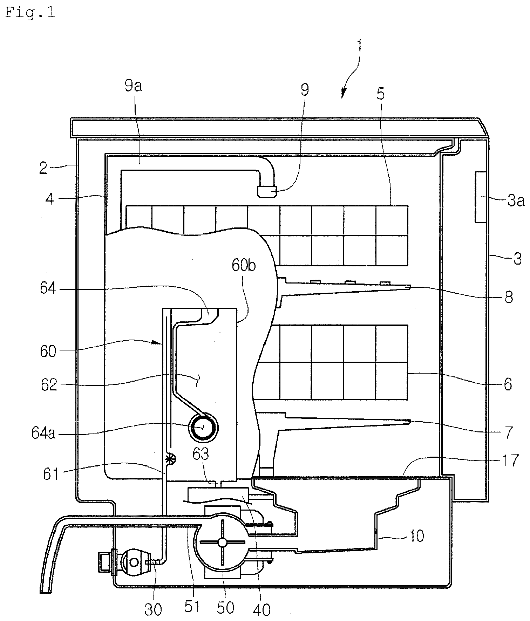

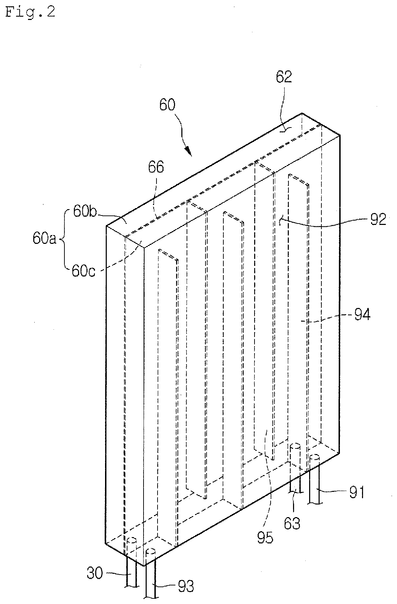

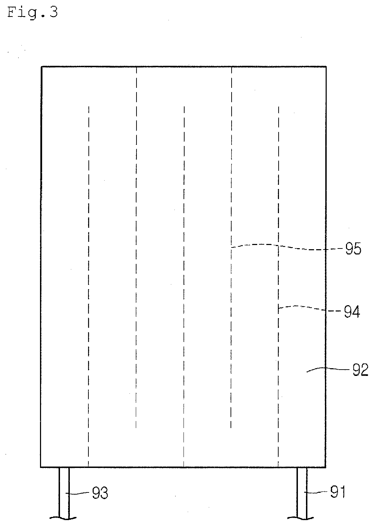

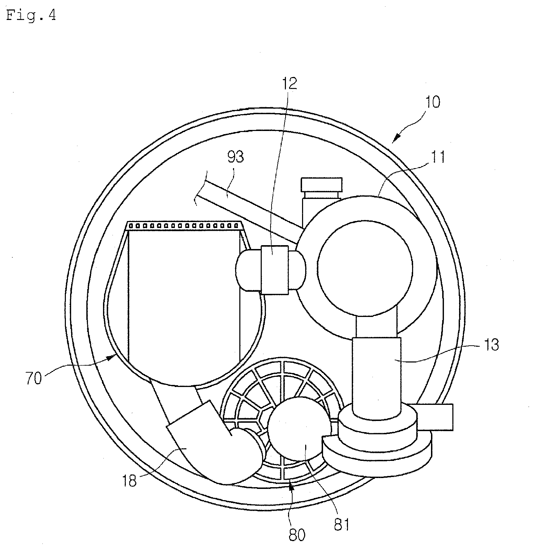

FIG. 1 is a schematic cross-sectional view of a dishwater according to a first embodiment, FIG. 2 is a perspective view of a water supply unit according to the first embodiment, FIG. 3 is a front view of the water supply unit, showing the structure of a heat exchange passage, and FIG. 4 is a bottom view of a sump according to the first embodiment.

A portion (water supply part) of the configuration of a water supply unit is shown in FIG. 1 and the structure (heat exchange part) that is not shown in FIG. 1 is clearly shown in FIG. 2.

Referring to FIGS. 1 to 4, a dish washer 1 according to the embodiment comprises a case 2 that forms the external shape, a tub 4 that is disposed in the case 2 and defines a wash space where dishes are washed, a sump 10 that is disposed at a side of the tub 4 and collects wash water for washing dishes, and a door 3 that opens/closes the tub 4. The door 3 may be equipped with a control panel 3a that controls the operation of the dish washer 1. Further, the control panel 3a may be disposed at the case 2.

A plurality of racks where dishes are placed is disposed inside the tub 4. The racks may comprise a top rack 5 and a bottom rack 6 under the top rack 5. Although it is exemplified when two racks 5 and 6 are disposed inside the tub 4 in the embodiment, it should be understood that the number of the racks is not limited in the embodiment.

Further, a plurality of wash arms, which is supplied with wash water from the sump 10 and sprays the wash water to the dishes on the racks 5 and 6, is disposed inside the tub 4.

The wash arms may comprise a bottom arm 7 connected to the sump 10, an intermediate arm 8 disposed above the bottom arm 7 and supplied with the wash water from the sump 10, and a top arm 9 disposed above the intermediate arm 8 and supplied with the wash water from the sump 10. It should be understood that the number of the wash arms is not limited and the number of the wash arms may depend on the number of the racks.

A wash water guide 9a that allows the wash water to be supplied to the intermediate arm 8 and the top arm 9 is connected to the sump 10. One wash water passage or two wash water passages, which are divided, may be formed in the wash water guide 9a. Alternatively, the wash water may be supplied to the intermediate arm 8 and the top arm 9 through a plurality of wash water guides, respectively.

The sump 10 comprises a wash pump 70 that pumps up the wash water in the sump 10 and an adjuster 80 that adjusts the flow of the pumped wash water. Further, a drain pump 50 is connected to the sump 10. A drain passage 51 is connected to the drain pump 50. Therefore, the wash water that is discharged by the drain pump 50 is discharged out of the dish washer 1 through the drain passage 51.

The sump 10 comprises a first guide pipe 12 that guides the wash water to the wash pump 70 and a second guide pipe 13 that guides the wash water to the drain pump 50. A receiving portion 11 where a filter unit (described below) is received is formed in the sump 10. In the embodiment, since the wash water can be stored in the receiving portion 11, the receiving portion 11 can be called a wash water chamber. The first guide pipe 12 and the second guide pipe 13 extend from the receiving portion 11, apart from each other. The sump 10 further comprises a third guide pipe 18 that guides the wash water pumped up by the wash pump 70 to the adjuster 80.

An inlet 17 through which the wash water flows inside may be formed at the top of the sump 10. The wash water sprayed from one or more of the wash arms 7, 8, and 9 collects in the sump 10 through the inlet 17. Further, the wash water collecting in the sump 10 is supplied back to one or more of the wash arms 7, 8, and 9 by the wash pump 70.

The water supply unit 60 that guides the flow of the wash water is disposed between the tub 4 and the case 2. The water supply unit 60 can make the air outside the tub 4 and the air inside the tub 4 flow to each other.

The water supply unit 60 comprises a body 60a defining a space inside and a separator 66 dividing the space inside the body 60a into at least two spaces. The water supply unit 60 can be divided into the water supply part 60b and the heat exchange part 60c by the separator 66. That is, the water supply unit 60 comprises the water supply part 60b and the heat exchange part 60c.

The water supply part 60b comprises a first passage 61 communicating with a water supply pipe 30 connected with an external water supplier (not shown), a water chamber 62 where the water supplied through the first passage 61 collects, and a second passage 63 through which the water in the water chamber 62 is discharged. The second passage 63 is connected with a softener 40. The softener 40 removes hardness components contained in the water. Further, the softener 40 may be connected to the sump 10 or the tub 4. In the embodiment, since the water that is supplied from the outside to the sump 10 flows through the water supply pipe 30, the first and second passages 61 and 63, and the softener 40, they can be called a water supply passage. The softener may be removed, depending on the types of dish washers. In this case, the second passage 63 may be connected to the sump 10 or the tub 4. The water that is not supplied to the tub or the sump is stored in the water chamber 62.

Further, the water supply part 60b comprises a communicating passage 64 that communicates with the outside of the tub 4 or the outside of the dish washer 1 and a communicating hole 64a that communicates with the tub 4. The communicating passage 64 is separated from the first and second passages 61 and 63 and the water chamber 62.

Therefore, the inside of the tub 4 can be maintained at the atmospheric pressure by the water supply unit 60 and the pressure inside the tub 4 can be prevented from being increased by high-temperature air.

Meanwhile, the heat exchange part 60c can be supplied with the wash water from the sump 10. Therefore, heat can be exchanged between the wash water supplied to the heat exchange part 60c and the water collecting in the water chamber 62 of the water supply part 60b.

A supply passage 91 for being supplied with the wash water from the sump 10 and a discharge passage 93 for discharging the wash water that has exchanged heat with the water in the water chamber 62 into the sump 10 are connected to the heat exchange part 60c.

A heat exchange passage (or heat exchange channel) 92 for heat exchange between the water in the water chamber 62 and the wash water supplied from the sump is defined in the heat exchange part 60c. That is, in the embodiment, the heat exchange passage 92 and the water chamber 62 are separately formed in the water supply unit 60 and the water exchange passage 92 is defined by a body 60a of the water supply unit 60.

The wash water in the supply passage 91 is in a state before heat exchange, the wash water in the heat exchange passage 92 is in a state where heat is exchanged with the water in the water chamber 62, and the wash water in the discharge passage 93 is in a state where heat exchange is finished.

The wash water in a specific operation or before being discharged after a specific operation is finished can flow to the heat exchange part 60c. Water is supplied to the water chamber 62 from the external water supplier. The water can be supplied to the water chamber 62 in a specific operation or after a specific operation is finished.

In the embodiment, the temperature of the wash water of the sump 10 which flows to the heat exchange part 60c is higher than the temperature of the water stored in the water chamber 62. The wash water is heated by the heat of the dishes or a heater 19 disposed at the sump 10, such that temperature of the wash water is higher than the temperature of the water in the water chamber 62. Therefore, as the wash water flows to the heat exchange part 60c, the water in the water chamber 62 increases in temperature by exchanging heat with the wash water in the heat exchange part 60c.

The water in the water chamber 62 is used in the next operation, after a specific operation is finished. As the temperature of the water in the water chamber 62 increases, the operation efficiency (efficiency of washing or efficiency of rinsing) of the next operation can be improved.

In the embodiment, the heat exchange passage 92 may bend one or more parts in order to improve the heat exchange efficiency between the water in the water chamber 62 and the wash water flowing through the heat exchange passage 92. In detail, the heat exchange part 60c is provided with a plurality of guides 94 and 95 to increase the flow distance of the wash water supplied from the sump 10. The guides 94 and 95 allow formation of zigzag heat exchange passage 92, for example, in the heat exchange part 60c. That is, one end of the first guide 94 is in contact with one side of the heat exchange part 60c and the other end is spaced apart from the other side (opposite to the one side) of the heat exchange part 60c. On the contrary, one end of the second guide 95 is spaced apart from one side of the heat exchange part 60c and the other end is in contact with the other side of the heat exchange part 60c.

In the embodiment, although one or more first and second guides 94 and 95 may be provided, more number of first and second guides may be provided, respectively, to increase the length of the heat exchange passage 92. Although it is shown in FIG. 3 that the first and second guides 94 and 95 extend up and down, the first and second guides 94 and 94 may extend left and right or at an angle.

Therefore, the heat of the wash water transfers to the water in the water chamber 62 through the separator 66 while the wash water supplied from the sump 10 flows through the heat exchange passage 92. Therefore, the separator 66 may be called as a heat transfer part, because it transfers heat in the embodiment.

In this configuration, the separator 66 is integrally formed with the body 60a, but may be implemented as an individual component. In this case, the separator 66 may be made of metal having high thermal conductivity, such as copper or aluminum. A heat instructor may be disposed on the inner side and the outer side of the heat exchange part 60c, except for the separator 66.

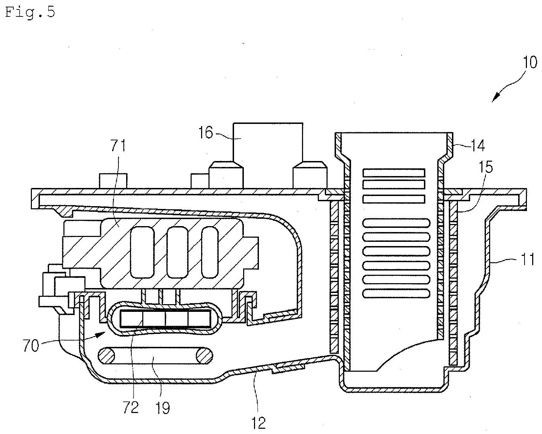

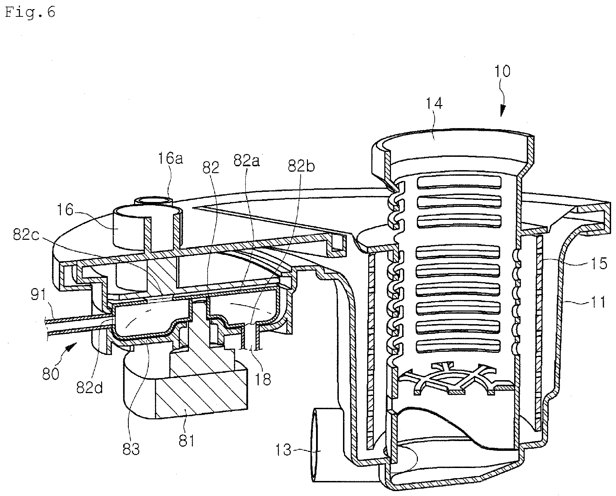

FIG. 5 is a cross-sectional view of the sump, showing the structure of a wash pump and FIG. 6 is a cross-sectional view of the sump, showing the structure of an adjuster.

Referring FIGS. 1 to 6, filter units 14 and 15 are accommodated in the receiving portion 11 of the sump 10. The filter units 14 and 15 comprise a first filter 14 that filters relatively large foreign substances and a second filter 15 that filters relatively small foreign substances. That is, the second filter 15 filters foreign substances that are not filtered through the first filter 14. Although it is exemplified in the embodiment that the filter units comprise two filters, the number of filters is not limited and one or more filters may be comprised.

As the wash pump 70 operates, the wash water sequentially passes through the first filter 14 and the second filter 15, and then flows to the wash pump 70 through the first guide pipe 12.

The wash pump 70 comprises a wash motor 71 and an impeller 72 connected to the wash motor 71. Further, the heater 19 that heats the wash water may be disposed under the impeller 72 in the sump 10. Therefore, the wash water heated by the heater 19 can flow to the adjuster 80 by rotation of the impeller 72.

The adjuster 80 comprises a control valve 82 and a valve motor 81 that rotates the control valve 82. A case 83 where the control valve 82 is accommodated is formed in the sump 10 and the valve motor 81 is connected to the control valve 82, at the outside of the sump 10, that is, the outside of the case 83.

The control valve 82 comprises a body 82a where a chamber in which the wash water flows is formed. The body 82a has one or more inlet holes 82b through which the wash water supplied from the third guide pipe 18 inside, one or more arm holes 82c for supplying the wash water to one or more arms of the wash arms, and one or more heat exchange holes 82d for supplying the wash water to the heat exchange part 60c. The supply passage 91 of the heat exchange part 60c is connected to the case 83. Further, the discharge passage 93 of the heat exchange part 60c is connected to the receiving portion 11 of the sump 10. In the embodiment, since supplying the wash water to one or more of the wash arms by using the control valve 82 can be implemented by well-known configuration, the detailed description is not provided.

As the control valve 82 turns to a predetermined position, the heat exchange hole 82d communicates with the supply passage 91, such that the wash water flows to the heat exchange part 60c. Therefore, whether the wash water flows to the heat exchange passage may be determined by the turning position of the control valve 82. When the supply passage 91 communicates with the heat exchange hole 82d, the arm hole 82c may communicate with one or more of the wash arms, or may not communicate with all of the wash arms.

A first connecting portion 16 where the bottom arm 6 is connected and a second connecting portion 16a where the wash water guide 9a is connected are formed at the top of the sump 10.

Meanwhile, the wash water collecting in the sump 10 flows to the wash pump 70 through the filters 14 and 15 and the first guide pipe 12, a large amount of foreign substances collect or stick to the portions adjacent to the guide pipe 12 (or wash pump) in the filters 14 and 15.

Therefore, the discharge passage 93 is connected to the receiving portion 11 to clean the filters 14 and 15 in the embodiment. Therefore, the wash water in the discharge passage 93 is discharged to the filters 14 and 15. That is, the wash water of the discharge passage 92 is discharged to the outer circumferential surfaces of the filters 14 and 15 such that the foreign substances collecting or sticking to the inner circumferential surfaces of the filters 14 and 15 are removed from the filters 14 and 15.

The wash water discharged from the discharge passage 92 hits against the portions adjacent to the first guide pipe 12 (or wash water) in the filters 14 and 15. For example, the discharge passage is connected to the receiving portion, with the flow direction of the wash water flowing through the discharge passage 93 opposite to the flow direction of the wash water flowing through the first guide pipe 12. Therefore, the foreign substances are removed from the filters 14 and 15, the performance of the filters is improved and the water can smoothly flow.

Meanwhile, the dish washer 1 performs a plurality of operations until completing washing the dishes. In general, the operations may comprise at least washing that washes the dishes and rinsing that rinses out the dishes. Drying may be added after rinsing is completed, depending on the types of dish washers.

The washing is a single or may comprise a plurality of sub-operations. For example, the washing may comprise pre-washing and main washing. The heater 19 may not operate in the pre-washing, while the heater 19 may operate in the main washing. When the washing is a single operation, the heater 19 may operate at least in some period of the operation.

The rinsing is a single or may comprise a plurality of sub-operations. For example, the rinsing may comprise common rinsing and heat-rinsing. The heater 19 may not operate in the common rinsing, while the heater 19 may operate in the heat-rinsing. When the rinsing is a single operation, the heater 19 may operate at least in some period of the operation.

Meanwhile, water may be supplied from the outside to the dish washer, before at least one operation of the entire operation for washing the dishes starts. In this state, water that is used in the next operation is stored in the water chamber 62.

Since the heater 19 operates when the main washing is performed, the temperature of the washing water is higher than the temperature of the water in the water chamber 62. Therefore, in order to improve the operation efficiency of the common rinsing, heat exchange may be performed between high-temperature wash water and the water in the water chamber 62, before the common rinsing starts. Heat exchange may be made between the high-temperature wash water and the water in the water chamber 62 to improve the operation efficiency in the following rinsing, even if the washing is a single operation.

When the water is stored in the water chamber 62, the heat inside the tub can transfer to the water in the water chamber 62. Therefore, the water in the water chamber 62 can be increased in temperature by the heat inside the tub. The water supply part 60b may be in contact with the tub 4 or a heat conductor may be disposed between the water supply part 60b and the tub 4 so that the heat of the tub 4 transfers to the water in the water chamber 62.

Alternatively, although the heater 19 does not operate in the common rinsing, the temperature of the wash water is higher than the temperature of the water in the water chamber 62, due to latent heat inside the tub. Therefore, in order to improve the operation efficiency of the heat-rinsing, heat exchange may be performed between high-temperature wash water and the water in the water chamber, before the rinsing starts.

Hereafter, the "specific operation" implies a operation in which the temperature of the wash water when the present operation is performed is higher than the temperature of the water that is supplied to the next operation and the specific operation may be one or more until washing the dishes is completed.

A control method of the dish washer according to the embodiment is described hereafter.

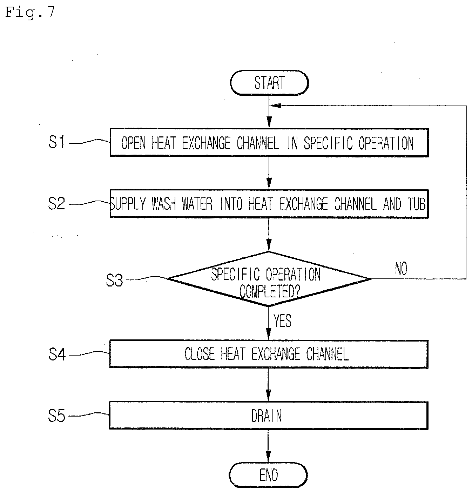

FIG. 7 is a flowchart illustrating a control method of the dish washer according to the first embodiment.

The embodiment exemplifies that the wash water flows to the heat exchange passage in a specific operation.

Referring to FIG. 7, the heat exchange passage 92 is opened by the operation of the adjuster 80 in the specific operation (S1). In the embodiment, the fact that the heat exchange passage 92 is opened implies that a state in which the wash water can flow to the heat exchange passage 92 is implemented.

When water that is used in the next operation is supplied to the water chamber 62 in the early state of the specific operation, the heat exchange passage 92 may be opened in the early state of the specific operation. When water that is used in the next operation is supplied to the water chamber 62 in the middle of the specific operation, the heat exchange passage 92 may be opened when water starts to be supplied to the water chamber 62. Since the heat exchange passage 92 is opened during the specific operation in the embodiment, the wash water can be supplied to at least one arm of the wash arms.

Since the wash pump 70 operates in the specific operation, when the heat exchange passage 92 is opened, the wash water is supplied to the heat exchange passage 92 and the wash water is supplied to the tub 4 by at least one wash arm (S2). That is, when the heat exchange passage 92 is opened, some of the wash water is bypassed to the heat exchange passage while the sump 10 is washed. The wash water supplied to the heat exchange passage 92 is returned to the sump 10, after exchanging heat with the water in the water chamber 62. In the embodiment, since when the wash water flowing through the heat exchange passage 92 washes the filter unit while returns to the sump 10, the process of heat exchange between the wash water and the water chamber may be called a process of cleaning a filter, in terms of washing of the filter unit.

It is determined in the specific operation whether the operation is completed (S3), and when it is determined that the specific operation is completed, the heat exchange passage 92 is closed by the operation of the adjuster 80 (S4). That is, the supply passage 91 and the control valve 82 are blocked.

Further, the operation of the wash pump 70 is stopped. In the embodiment, the fact that the heat exchange passage 92 is closed implies that a state in which the wash water does not flow to the heat exchange passage 92 is implemented.

When the heat exchange passage 92 is closed, the drain pump 50 operates and draining starts (S5). The heat exchange passage 92 communicates with the sump 10 by the discharge passage 93, the wash water in the heat exchange passage 92 can be discharge outside the dish washer when the drain pump 50 operates. The water in the water chamber 62 is supplied to the sump 10 or the tub 4, after draining is completed.

According to the embodiment, the water that is used in the next operation exchanges heat with the wash water of which the temperature is higher than the temperature of the water and the heat-exchanged water is supplied to the sump 10, such that the operation efficiency of the next operation, for example, the washing or rinsing efficiency is improved.

Further, since the heat exchange passage 92 in the water chamber 62 bends one or more times, heat exchange efficiency between the water in the water chamber 62 and the wash water in the heat exchange passage 92 is improved.

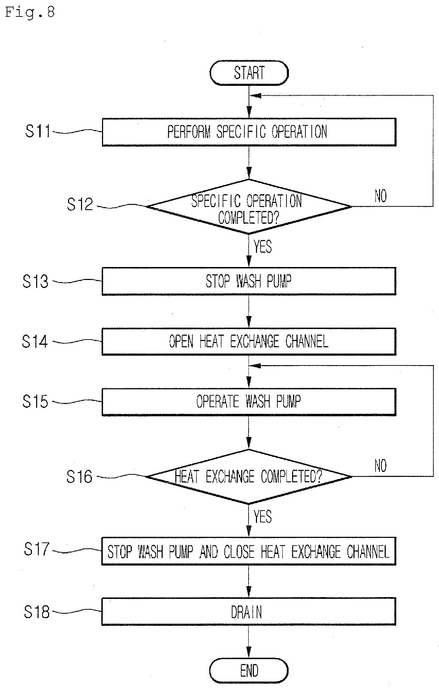

FIG. 8 is a view illustrating a control method of a dish washer according to a second embodiment.

The embodiment is the same in other configurations as the first embodiment, but is different in the timing of opening the heat exchange passage.

Referring to FIG. 8, a specific operation starts, the wash pump 70 operates and washing the dishes starts (S11). Further, it is determined whether the operation is completed in the specific operation (S12). When it is determined that the specific operation is completed, the wash pump 70 stops (S13). Next, the heat exchange passage 92 is opened by the operation of the adjuster 80 (S14). Further, the wash pump 70 operates (S15). Alternatively, the heat exchange passage 92 may be opened by the operation of the adjuster 80 while the wash pump 70 keep operating after the specific operation is completed. Obviously, the wash water is not supplied to the wash arms, after the specific operation is completed.

As the heat exchange passage 92 is opened, the wash water exchanges heat with the water in the water chamber 62 while flowing through the heat exchange passage 92. Whether the heat exchange is completed is determined in this process (S16). Whether heat exchange is completed may be determined, for example, by the operation time of the wash pump 70, the number of revolutions of the wash motor, the flow rate of the wash water flowing to the heat exchange passage (a flow sensor may be additionally provided in this case), or the temperature of the water which is sensed by a temperature sensor disposed in the water chamber 62, after the specific operation is completed. The method of determining whether heat exchange is completed is not limited in the embodiment.

When it is determined that heat exchange is completed, the operation of the wash pump 70 stops and the heat exchange passage 92 is closed (S17). Thereafter, the drain pump 50 operates and draining is performed (S18).

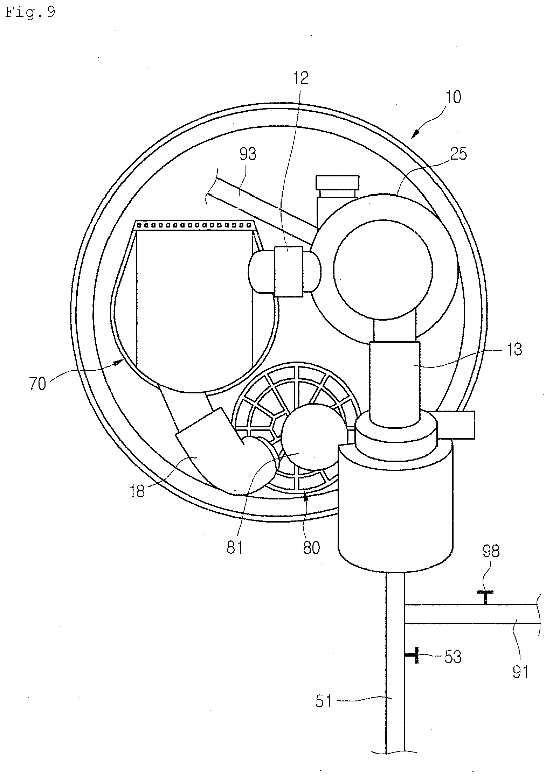

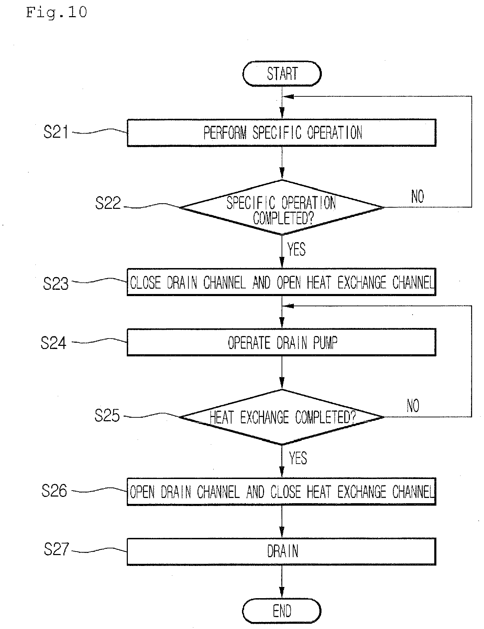

FIG. 9 is a bottom view of a sump according to a third embodiment and FIG. 10 is a flowchart illustrating a control method of the dish washer according to the third embodiment.

First, referring to FIG. 9, the supply passage 91 of the embodiment is connected to the drain passage 51 connected to the outlet side of the drain pump 50 while the discharge passage 93 is connected to the receiving portion 11 of the sump 10. The discharge passage 93 may be connected to the receiving unit 11, at the positions adjacent to the first guide pipe 12, in order to clean the filters 14 and 15, as described in the first embodiment. The flow direction of the wash water flowing through the discharge passage 93 and the flow direction of the wash water flowing through the first guide pipe 12 are substantially different.

A first valve 53 is disposed in the drain passage 51 to open/close the passage and a second valve 98 is disposed in the supply passage 91 (or heat exchange passage) to open/close the passage.

A control method of the dish washer according to the embodiment is described hereafter.

Referring to FIG. 10, a specific operation starts, the wash pump 70 operates and washing the dishes starts (S21). Further, it is determined whether the operation is completed in the specific operation (S22). When it is determined that the specific operation is completed, the wash pump 70 stops. Further, the drain passage 51 is closed by the first valve 53 and the heat exchange passage (or supply passage) is opened by the second valve 98 (S23). Since the drain pump 50 does not operate before drain is performed, the heat exchange passage 92 and the drain passage 51 can be open. However, the drain passage 51 should be closed and the heat exchange passage 92 should be open, before the specific operation is completed and drain is performed. Obviously, since the wash pump 70 operates in the specific operation, the wash water does not flows to the heat exchange passage 92 even if the heat exchange passage is open.

The drain pump 50 operates after the drain passage 51 is closed and the heat exchange passage 92 is opened (S24). Accordingly, the wash water in the sump 10 flows to the heat exchange passage 92 through the drain pump 50. Accordingly, the wash water exchanges heat with the water in the water chamber 62 while flowing through the heat exchange passage 92. The wash water that has exchanged heat with the water flows into the sump 10.

Whether the heat exchange is completed is determined in this process (S25). When it is determined that the heat exchange is completed, the heat exchange passage 92 is closed and the drain passage 51 is opened (S26). In this operation, the drain pump 50 keeps operating. As the drain passage 51 is opened, drain is performed (S27).

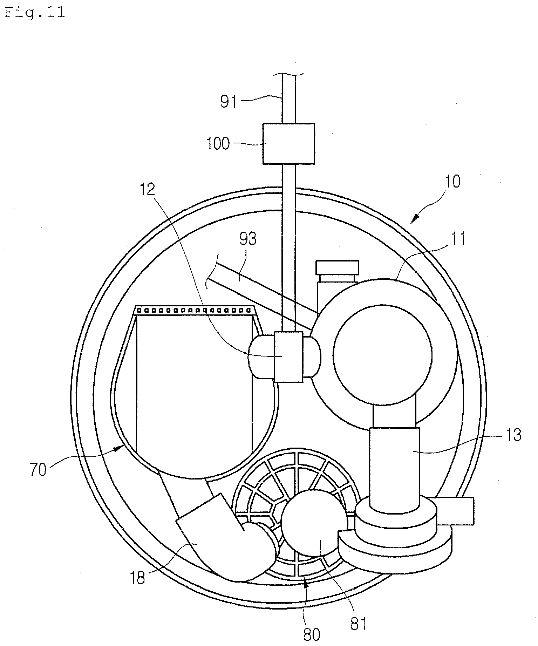

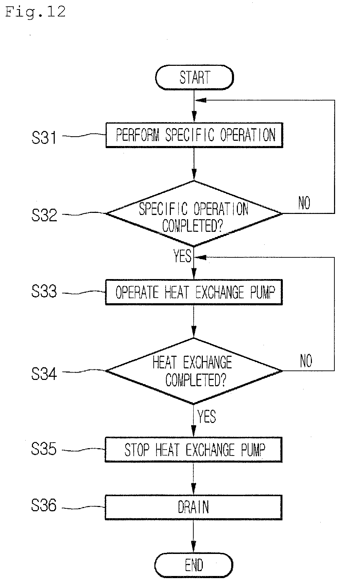

FIG. 11 is a bottom view of a sump according to a fourth embodiment and FIG. 12 is a flowchart illustrating a control method of the dish washer according to the fourth embodiment.

First, referring to FIG. 11, the supply passage 91 of the embodiment is connected to the first guide pipe 12 that guides the wash water to the wash pump 70 while the discharge passage 93 is connected to the receiving portion 11 of the sump 10.

A heat exchange pump 100 that allows the wash water to flow to the supply passage 9 is disposed in the supply passage 91.

A control method of the dish washer according to the embodiment is described hereafter.

Referring to FIG. 12, a specific operation starts, the wash pump 70 operates and washing the dishes starts (S31). Further, it is determined whether the operation is completed in the specific operation (S32). When it is determined that the specific operation is completed, the wash pump 70 stops. Next, the heat exchange pump 100 operates (S33). Accordingly, the wash water in the sump 10 flows to the heat exchange passage 92 by the operation of the heat exchange pump 100. Accordingly, the wash water exchanges heat with the water in the water chamber 62 while flowing through the heat exchange passage 92. The wash water that has exchanged heat with the water flows into the sump 10.

Whether the heat exchange is completed is determined in this process (S34). When it is determined that the heat exchange is completed, the heat exchange pump 100 stops (S35). Thereafter, the drain pump 50 operates and draining is performed (S36).

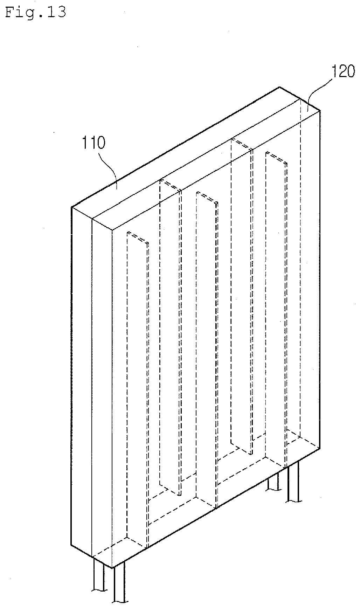

FIG. 13 is a perspective view of a water supply unit according to a fifth embodiment.

Referring to FIG. 13, a heat exchange unit 120 is in contact with a surface of a water supply unit 110 of the embodiment. That is, the water supply unit 110 and the heat exchange part 120 are separately formed, in contact to exchange heat with each other.

The structure of the water supply unit 110 is the same as the structure of the water supply part 60b of the first embodiment and the structure of the heat exchange part 120 is the same as the structure of the heat exchange part 60c of the first embodiment, such that the detailed description is not provided.

The heat exchange unit 120 may be made of metal having high thermal conductivity, such as copper or aluminum. Alternatively, the surface that is in contact with the water supply unit 110, in the heat exchange unit 120, may be made of metal. It should be understood that the material of the heat exchange unit 120 is not limited in the embodiment.

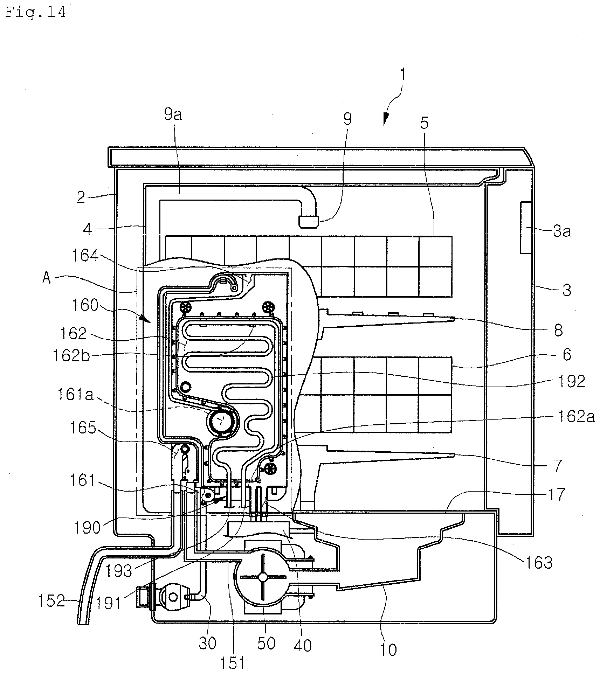

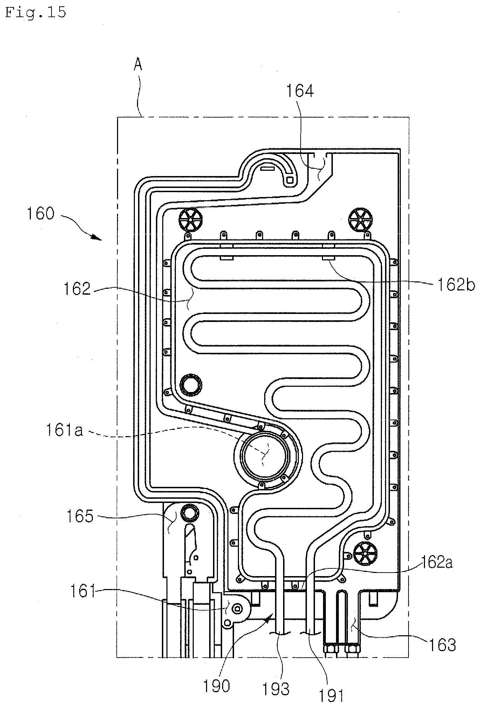

FIG. 14 is a cross-sectional view of a dish washer equipped with a water supply unit according to a sixth embodiment and FIG. 15 is an enlarged view of the portion A of FIG. 14.

Referring to FIGS. 14 and 15, the water supply unit 160 of the embodiment comprises a first passage 161 communicating with a water supply pipe 30 connected with an external water supplier (not shown), a water chamber 162 where the water supplied through the first passage 161 collects and a second passage 163 through which the water in the water chamber 162 is discharged.

Further, the water supply unit 160 comprises a communicating passage 164 that communicates with the outside of the tub 4 or the outside of the dish washer 1 and a communicating hole 164a that communicates with the tub 4. The communicating passage 164 is separated from the first and second passages 161 and 163 and the water chamber 162.

Further, the water supply unit 160 comprises a guide passage 165 through which the wash water discharged from the sump 10 flows. One end of the guide passage 165 communicates with the drain pump 50 by a first drain passage 151. A second drain passage 152 is connected to the other end of the guide passage 165. Therefore, the wash water that is discharged by the drain pump 50 is discharged out of the dish washer 1 through the first drain passage 151, the guide passage 165, and the second drain passage 152.

Meanwhile, the dish washer 1 further comprises a heat exchange pipe 190 for collecting some of the wash water in the sump 10, which has exchanged heat with the water in the water chamber 162 of the water supply unit 160, into the sump 10. The heat exchange pipe 190 defines a heat exchange passage and a portion of the heat exchange pipe 190 is positioned inside the water chamber 162.

The heat exchange pipe 190 comprises a first heat exchange pipe 191 (or supply pipe) connected with the sump 10, at the outside of the water supply unit 160, a second heat exchange pipe 192 disposed in the water chamber 160, and a third heat exchange pipe 193 (discharge pipe) guiding the wash water, which exchanges heat while flowing through the second heat exchange pipe 192, into the sump 10, at the outside of the water supply unit 160. The first heat exchange pipe 191 defines a supply passage and the third heat exchange pipe 193 defines a discharge passage.

The state of the wash water flowing through the heat exchange pipe 190 is described. The wash water in the first heat exchange pipe 191 is in a state before heat exchange, the wash water in the second heat exchange pipe 191 is in a state where heat is being exchanged with the water in the water chamber 162, and the wash water in the third heat exchange pipe 193 is a state after heat exchange is completed.

In the embodiment, the second heat exchange pipe 190 may bend one or more times in order to improve the heat exchange efficiency between the water in the water chamber 162 and the wash water flowing through the heat exchange pipe 192. For example, the second heat exchange pipe 192 bends several times in FIG. 15. Further, at least a portion of the second heat exchange pipe 192 may be disposed zigzag, for example. At least a portion of the second heat exchange pipe 192 may be horizontally arranged. Alternatively, at least a portion of the second heat exchange pipe 192 may be vertically arranged.

Further, the second heat exchange pipe 192 is arranged such that water can uniformly flow inside the entire water chamber 162 in order to improve heat exchange efficiency between the water in the water chamber 162 and the wash water flowing through the heat exchange pipe 190.

The heat exchange pipe 190 passes through one side (for example the bottom 162a) of the water chamber 162 into the water chamber 162, and passes through one side (for example the bottom 162a) of the water chamber 162 to the outside. The water in the water chamber 162 is in contact with the second heat exchange pipe 192. Further, the heat exchange pipe 190 may be made of a material having high thermal conductivity, for example copper or aluminum.

The water chamber 162 may have one or more supports 162b that support the heat exchange pipe 190. The supports 162b can prevent the heat exchange pipe 390 from sagging.

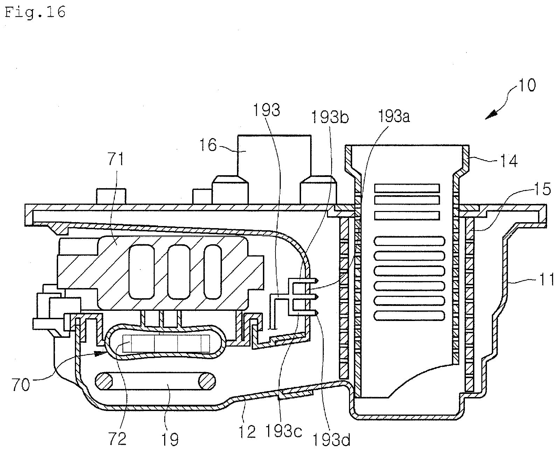

FIG. 16 is a cross-sectional view of a sump according to the sixth embodiment.

Referring to FIG. 16, the third heat exchange pipe 193 comprises a main pipe 193a and one ore more diverging pipes 193b and 193c. The main pipe 193b defines a main passage and the diverging pipe 193b and 193c define diverging passages.

The main pipe 193a and the diverging pipes 193b and 193c are connected to the receiving portion at positions adjacent to the first guide pipe 12. The main pipe and the diverging pipes may be arranged apart from each other in the up-down direction such that the performance of cleaning the filter unit increases.

Further, a nozzle 193d may be connected to the main pipe 193a and the diverging pipes 193b and 193 such that the performance of cleaning the filters is increased by increasing the discharge speed of the wash water.

The wash water discharged from the main pipe and the diverging pipes hits against the portions adjacent to the first guide pipe 12 (or wash water) in the filters 14 and 15. That is, the flow direction of the wash water flowing through the main pipe and the diverging pipe and the flow direction of the wash water flowing through the first guide pipe 12 are substantially different. Therefore, the foreign substances are removed from the filters 14 and 15, the performance of the filters is improved and the water can smoothly flow.

Although it is described in the embodiments that the wash water that has exchanged heat directly collects into the sump, the wash water that has exchanged heat may collects into the sump after flowing into the tub, (indirectly collects into the sump).

## Claims

1. A dish washer comprising:
a water supply unit (60) that has a water chamber (62) collecting water that is used to wash dishes;
a sump (10) that is supplied with the water in the water chamber (62) and supplies wash water into a tub (4);
a filter unit (14, 15) that is disposed in the sump (10) and filters foreign substances in the wash water;
a wash pump (70) that pumps up the wash water in the sump (10) to the tub;
a heat exchange passage (92) for heat exchange between the wash water in the sump (10) and the water collecting in the water chamber (62);
a supply passage (91) that allows the wash water in the sump (10) into the heat exchange passage (92); and
a discharge passage (93) through which the wash water in the heat exchange passage (92) is discharged,
wherein the sump (10) comprises a receiving portion (11) that receives' the filter unit (14, 15) and the discharge passage (93) is connected to the receiving portion (11), at a position adjacent to the wash pump (70); and
wherein the wash water that has exchanged heat with the water chamber (62) is discharged to the filter unit (14, 15), **characterized in that** the discharge passage (93) comprises a main passage and one or more diverging passages that diverge from the main passage.

2. The dish washer according to claim 1, wherein the heat exchange passage is disposed in the water supply unit.

3. The dish washer according to claim 1 or 2, wherein the main passage and the one or more diverging passages are arranged apart from each other in the up-down direction.

4. The dish washer according to any of claims 1 to 3, wherein a nozzle (193d) that sprays the wash water is disposed at the ends of the main passage and the one or more diverging passages, respectively.

5. The dish washer according to any of claims 1 to 4, wherein the flow direction of the wash water flowing to the wash pump (70) through the filter unit (14, 15) is opposite to the flow direction of the wash water discharged to the filter unit (14, 15) from the discharge passage (93).

6. The dish washer according to any of claims 1 to 5, wherein the wash water of the sump (10) is supplied to the supply passage (91) by pumping force of the wash pump (70).

7. The dish washer according to any of claims 1 to 6, further comprising a guide pipe (12) that guides the wash water to the wash pump (70),
wherein the supply passage (91) is connected to the guide pipe (12) and a heat exchange pump (100) that pumps up the wash water into the supply passage (91) is disposed in the supply passage (91).

8. The dish washer according to any of claims 1 to 7, further comprising:
a drain pump (50) discharging the wash water in the sump (100); and
a drain passage (51) through which the wash water discharged by the drain pump (50) flows,
wherein the heat exchange passage (92) is supplied with the wash water from the drain passage (51).

9. The dish washer according to any of claims 1 to 8, wherein water is supplied into the water chamber (62) in a specific operation, or before draining is performed after the specific operation is completed.

10. The dish washer according to any of claims 1 to 9, wherein the wash water in the sump (10) flows into the heat exchange passage (92) in a specific operation, or before draining is performed after the specific operation is completed.

## Patentansprüche

1. Geschirrspüler, der aufweist:
eine Wasserzufuhreinheit (60), die eine Wasserkammer (62) hat, die Wasser sammelt, das zum Geschirrspülen verwendet wird;
einen Sumpf (10), dem das Wasser in der Wasserkammer (62) zugeführt wird und der Spülwasser in einen Behälter (4) führt;
eine Filtereinheit (14, 15), die im Sumpf (10) angeordnet ist und Fremdstoffe im Spülwasser filtert;
eine Spülpumpe (70), die das Spülwasser im Sumpf (10) zum Behälter hochpumpt;
einen Wärmeaustauschkanal (92) zum Wärmeaustausch zwischen dem Spülwasser im Sumpf (10) und dem sich in der Wasserkammer (62) sammelnden Wasser,
einen Zufuhrkanal (91), der das Spülwasser im Sumpf (10) in den Wärmeaustauschkanal (92) ermöglicht; und
einen Abgabekanal (93), über den das Spülwasser im Wärmeaustauschkanal (92) abgegeben wird,
wobei der Sumpf (10) einen Aufnahmeabschnitt (11) aufweist, der die Filtereinheit (14, 15) aufnimmt, und der Abgabekanal (93) mit dem Aufnahmeabschnitt (11) an einer Position benachbart zur Spülpumpe (70) verbunden ist; und
wobei das Spülwasser, das Wärme mit der Wasserkammer (62) ausgetauscht hat, zur Filtereinheit (14, 15) abgegeben wird,
**dadurch gekennzeichnet, dass** der Abgabekanal (93) einen Hauptkanal und einen oder mehrere Abzweigkanäle aufweist, die vom Hauptkanal abzweigen.

2. Geschirrspüler nach Anspruch 1, wobei der Wärmeaustauschkanal in der Wasserzufuhreinheit angeordnet ist.

3. Geschirrspüler nach Anspruch 1 oder 2, wobei der Hauptkanal und der eine oder die mehreren Abzweigkanäle in Richtung von oben nach unten voneinander getrennt angeordnet sind.

4. Geschirrspüler nach einem der Ansprüche 1 bis 3, wobei eine Düse (193d), die das Spülwasser versprüht, an den Enden des Hauptkanals bzw. des einen oder der mehreren Abzweigkanäle angeordnet ist.

5. Geschirrspüler nach einem der Ansprüche 1 bis 4, wobei die Durchflussrichtung des Spülwassers, das über die Filtereinheit (14, 15) zur Spülpumpe (70) fließt, entgegengesetzt zur Durchflussrichtung des Spülwassers ist, das vom Abgabekanal (93) zur Filtereinheit (14, 15) abgegeben wird.

6. Geschirrspüler nach einem der Ansprüche 1 bis 5, wobei das Spülwasser des Sumpfs (10) dem Zufuhrkanal (91) durch Pumpkraft der Spülpumpe (70) zugeführt wird.

7. Geschirrspüler nach einem der Ansprüche 1 bis 6, der ferner ein Führungsrohr (12) aufweist, das das Spülwasser zur Spülpumpe (70) führt,
wobei der Zufuhrkanal (91) mit dem Führungsrohr (12) verbunden ist und eine Wärmeaustauschpumpe (100), die das Spülwasser in den Zufuhrkanal (91) hochpumpt, im Zufuhrkanal (91) angeordnet ist.

8. Geschirrspüler nach einem der Ansprüche 1 bis 7, der ferner aufweist:
eine Ablaufpumpe (50), die das Spülwasser im Sumpf (10) abgibt; und
einen Ablaufkanal (51), über den das durch die Ablaufpumpe (50) abgegebene Spülwasser fließt,
wobei dem Wärmeaustauschkanal (92) das Spülwasser vom Ablaufkanal (51) zugeführt wird.

9. Geschirrspüler nach einem der Ansprüche 1 bis 8, wobei Wasser der Wasserkammer (62) in einem spezifischen Betriebsablauf oder vor Durchführung des Ablaufs zugeführt wird, nachdem der spezifische Betriebsablauf abgeschlossen ist.

10. Geschirrspüler nach einem der Ansprüche 1 bis 9, wobei das Spülwasser im Sumpf (10) in den Wärmeaustauschkanal (92) in einem spezifischen Betriebsablauf oder vor Durchführung des Ablaufs fließt, nachdem der spezifische Betriebsablauf abgeschlossen ist.

## Revendications

1. Lave-vaisselle comprenant :
une unité d'alimentation en eau (60) qui a une chambre à eau (62) collectant l'eau qui est utilisée pour laver la vaisselle ;
un réservoir (10) qui reçoit l'eau provenant de la chambre à eau (62) et envoie l'eau de lavage dans un bac de lavage (4) ;
une unité de filtration (14, 15) qui est ménagée dans le réservoir (10) et filtre les substances étrangères de l'eau de lavage ;
une pompe de lavage (70) qui pompe l'eau de lavage dans le réservoir (10) vers le bac de lavage ;
un passage d'échange de chaleur (92) pour un échange de chaleur entre l'eau de lavage dans le réservoir (10) et l'eau collectée dans la chambre à eau (62) ;
un passage d'alimentation (91) qui permet à l'eau de lavage dans le réservoir (10) de passer dans le passage d'échange de chaleur (92) ; et
un passage d'évacuation (93) à travers lequel l'eau de lavage dans le passage d'échange de chaleur (92) est évacuée,
dans lequel le réservoir (10) comprend une partie de réception (11) qui reçoit l'unité de filtration (14, 15) et le passage d'évacuation (93) est relié à la partie de réception (11), à une position adjacente à la pompe de lavage (70) ; et
dans lequel l'eau de lavage qui a échangé de la chaleur avec la chambre à eau (62) est évacuée vers l'unité de filtration (14, 15), **caractérisé en ce que** le passage d'évacuation (93) comprend un passage principal et un ou plusieurs canaux divergents qui divergent depuis le passage principal.

2. Lave-vaisselle selon la revendication 1, dans lequel le passage d'échange de chaleur est disposé dans l'unité d'alimentation en eau.

3. Lave-vaisselle selon la revendication 1 ou 2, dans lequel le passage principal et les un ou plusieurs canaux divergents sont agencés à distance les uns des autres dans la direction haut-bas.

4. Lave-vaisselle selon l'une quelconque des revendications 1 à 3, dans lequel une buse (193d) qui pulvérise l'eau de lavage est disposée aux extrémités du passage principal et des un ou plusieurs canaux divergents, respectivement.

5. Lave-vaisselle selon l'une quelconque des revendications 1 à 4, dans lequel la direction d'écoulement de l'eau de lavage s'écoulant vers la pompe de lavage (70) à travers l'unité de filtration (14, 15) est opposée à la direction d'écoulement de l'eau de lavage évacuée vers l'unité de filtration (14, 15) depuis le passage d'évacuation (93).

6. Lave-vaisselle selon l'une quelconque des revendications 1 à 5, dans lequel l'eau de lavage du réservoir (10) est envoyée au passage d'alimentation (91) par la force de pompage de la pompe de lavage (70).

7. Lave-vaisselle selon l'une quelconque des revendications 1 à 6, comprenant en outre un tuyau de guidage (12) qui guide l'eau de lavage vers la pompe de lavage (70),
dans lequel le passage d'alimentation (91) est relié au tuyau de guidage (12) et une pompe d'échange de chaleur (100) qui pompe l'eau de lavage dans le passage d'alimentation (91) est disposée dans le passage d'alimentation (91).

8. Lave-vaisselle selon l'une quelconque des revendications 1 à 7, comprenant en outre :
une pompe de drainage (50) évacuant l'eau de lavage dans le réservoir (10) ; et
un passage de drainage (51) à travers lequel l'eau de lavage évacuée par la pompe de drainage (50) s'écoule,
dans lequel le passage d'échange de chaleur (92) reçoit l'eau de lavage depuis le passage de drainage (51).

9. Lave-vaisselle selon l'une quelconque des revendications 1 à 8, dans lequel l'eau est envoyée dans la chambre à eau (62) au cours d'une opération spécifique, ou avant la réalisation du drainage une fois que l'opération spécifique est terminée.

10. Lave-vaisselle selon l'une quelconque des revendications 1 à 9, dans lequel l'eau de lavage dans le réservoir (10) s'écoule dans le passage d'échange de chaleur (92) au cours d'une opération spécifique, ou avant la réalisation du drainage une fois que l'opération spécifique est terminée.
